(19) Europäisches Patentamt / European Patent Office / Office européen des brevets

(11) **EP 3 722 680 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **20168920.5**

(22) Anmeldetag: **09.04.2020**

(51) Internationale Patentklassifikation (IPC):
**F24D 3/02** (2006.01)  **F24D 19/10** (2006.01)
**G05D 23/19** (2006.01)

(52) Gemeinsame Patentklassifikation (CPC):
**F24D 19/1015; F24D 3/02; G05D 23/1934;**
Y02B 30/70

(54) **VERFAHREN ZUR DURCHFÜHRUNG EINES HYDRAULISCHEN ABGLEICHS EINES HEIZSYSTEMS FÜR EIN GEBÄUDE SOWIE DAZU AUSGEBILDETES HEIZSYSTEM**

METHOD FOR CARRYING OUT A HYDRAULIC ADJUSTMENT OF A HEATING SYSTEM FOR A BUILDING AND HEATING SYSTEM DESIGNED FOR THIS PURPOSE

PROCÉDÉ DE RÉALISATION D'UNE COMPARAISON HYDRAULIQUE D'UN SYSTÈME DE CHAUFFAGE POUR UN BÂTIMENT AINSI QUE SYSTÈME DE CHAUFFAGE CONÇU POUR CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2019 DE 102019109540**

(43) Veröffentlichungstag der Anmeldung:
**14.10.2020 Patentblatt 2020/42**

(73) Patentinhaber: **REHAU Industries SE & Co. KG 95111 Rehau (DE)**

(72) Erfinder: **Pommer, Willi 90427 Nürnberg (DE)**

(56) Entgegenhaltungen:
**EP-A1- 1 606 556  DE-A1-102006 060 324
DE-A1-102011 018 698  DE-B3-102015 121 418**

EP 3 722 680 B1

**Beschreibung**

Die Erfindung bezieht sich auf ein Verfahren zur Durchführung eines hydraulischen Abgleichs eines Heizsystems für ein Gebäude, welches ein ein Temperiermedium erwärmendes Temperierelement, eine Umwälzpumpe, mehrere mit dem Temperierelement und der Umwälzpumpe verbundene Wärmetauscher, wobei jeder Wärmetauscher einem Raum des Gebäudes zugeordnet ist und jedem Wärmetauscher ein den Durchfluss des Temperiermediums durch den Wärmetauscher regelndes Ventil mit einem diesem Ventil zugeordneten Stellantrieb zugeordnet ist, sowie mindestens eine Regeleinheit, die die Stellantriebe der Ventile steuert. Darüber hinaus bezieht sich die vorliegende Erfindung auf ein Heizsystem, dessen Regeleinheit zur Bereitstellung der Operationen zur Durchführung eines derartigen Verfahrens ausgebildet ist.

Für den energieeffizienten und den Komfortbedürfnissen der Nutzer gerecht werdenden Betrieb einer wasserbetriebenen Heizungsanlage ist es notwendig, dafür zu sorgen, dass die in den Räumen installierten Wärmetauscher mit einer an den Heizbedarf der Räume angepassten Menge an Temperiermedium durchströmt werden. Dabei weist das Temperiermedium eine an den Bedarf angepasste Temperatur auf.

Die in den Räumen installierten Wärmetauscher, im Falle einer Fußbodenheizung handelt es sich hier um Estrichflächen, in denen die vom Temperiermedium durchströmten Heizkreise liegen, weisen bedingt durch ihre unterschiedlichen Abmessungen und die damit resultierenden unterschiedlichen Rohrlängen unterschiedliche hydraulische Eigenschaften auf. Beim gleichzeitigen Betrieb mehrerer dieser Wärmetauscher in einem Heizsystem eines Gebäudes kann es dabei zu einer nicht bedarfsgerechten Verteilung des Temperiermediums auf die verschiedenen Wärmetauscher und in Folge davon zu einer nicht an den Bedarf angepassten Energieabgabe an die zu versorgenden Räume und in der Konsequenz zu einer nicht ausreichenden Erwärmung oder zu einer Überhitzung der Räume kommen. Um diese negativen Auswirkungen auf Komfort und Energieverbrauch zu vermeiden, sind Maßnahmen erforderlich, die an den tatsächlichen Bedarf angepasste hydraulische Verhältnisse in der Anlage zu schaffen. Dies wird als hydraulischer Abgleich des Heizsystems bezeichnet.

Dieser hydraulische Abgleich bei Flächenheizungssystemen ist ein Arbeitsschritt, der zur fachgerechten Inbetriebsetzung der Heizungsanlage bzw. des Heizsystems gehört. Durch den hydraulischen Abgleich soll gewährleistet werden, dass die Wärmetauscher mit den in der Auslegungsplanung ermittelten Mengen an Temperiermedium bzw. Wärmeträgermedium versorgt werden. Damit wird die Voraussetzung dafür geschaffen, dass die nachgeschaltete Raumtemperaturregelung optimal arbeitet. Üblicherweise erfolgt der hydraulische Abgleich durch ein Abdrosseln der die Wärmetauscher versorgenden Heizkreise bei der Inbetriebsetzung der Heizanlage auf Basis der durch die Auslegungsplanung ermittelten Einstellwerte. Nachteilig ist dabei, dass bei der Auslegungsplanung von den üblichen Vorgabewerten abweichende Wünsche des Nutzers der Anlage oder durch den Nutzer vorgenommene Änderungen an den Bodenbelägen, die sich auf den Wärmeübergang zwischen Wärmetauscher und Raum auswirken, nicht berücksichtigt werden.

Zur Lösung dieses Problems wurden Maßnahmen entwickelt, durch die der Arbeitsschritt des manuell durchgeführten hydraulischen Abgleichs durch einen Eingriff des Regelungssystems bzw. der Regeleinheit, das bzw. die entsprechende Antriebe ansteuert, die wiederum Ventile am Heizkreisverteiler betätigen und damit den Durchfluss des Heizmediums durch die Wärmetauscher freigeben oder sperren, zu ersetzen. Exemplarische Methoden zur Durchführung eines hydraulischen Abgleichs sind in der EP 1 606 556 A1, der DE 10 2006 060 324 A1, der DE 10 2015 121 418 B3 und der DE 10 2011 018 698 A1 beschrieben. Darüber hinaus beschreibt auch die EP 3 009 751 B1 ein Verfahren, in dem während einer Startphase des Systems die Öffnungszeiten der Ventile der einzelnen Räume verglichen werden. Durch die Ventile kann der Durchfluss des Heizmediums durch den dem jeweiligen Ventil zugeordneten Wärmetauscher freigegeben oder gesperrt werden. Zum hydraulischen Abgleich wird der Ventilhub des Ventils mit der kürzesten ermittelten Öffnungszeit verringert. Ein derartiges Verfahren setzt jedoch die Verwendung von Ventilen in dem Heizsystem voraus, deren Öffnen und Schließen mittels motorisch betriebener Stellantriebe erfolgt. Solche motorisch betriebenen Stellantriebe können über Stellungsimpulse oder über ein stetiges Signal in eine definierte Stellung gebracht werden, so dass ein definierter Öffnungsgrad der Ventile eingestellt werden kann. So kann ein durch einen solchen motorisch betriebenen Stellantrieb angetriebenes Ventil in eine beliebige Zwischenstellung zwischen den Endpositionen "geschlossen" und "vollständig geöffnet" gebracht werden. Eine derartige Zwischenstellung zwischen der offenen und der geschlossenen Endposition ist bei thermoelektrischen Zweipunkt-Antrieben, die üblicherweise in einem Regelungssystem zur Regelung der Raumtemperatur von Räumen, die durch ein Flächenheizungssystem beheizt werden, eingesetzt werden, aber nur sehr schwer exakt zu erzielen. Derartige thermoelektrische Zweipunkt-Antriebe können zwei Endpositionen einnehmen, in denen das durch den jeweiligen Antrieb betätigbare Ventil geöffnet oder geschlossen ist. Der Übergang zwischen den beiden Endpositionen erfolgt in der Regel in einer Zeitspanne von drei bis fünf Minuten. In dieser Zeit durchfährt das Ventil den Weg zwischen der "geschlossenen" und "geöffneten" Endposition. Der daraus resultierende Durchfluss des Heizmediums durch den Wärmetauscher variiert in dieser Zeitspanne zwischen dem Wert "Null" und einem durch die momentan herrschenden hydraulischen Verhältnisse bestimmten maximalen Wert.

An dieser Stelle setzt die vorliegende Erfindung ein, der die Aufgabe zugrunde liegt, ein Verfahren zur Durchführung eines hydraulischen Abgleichs eines Heizsystems für ein Gebäude sowie ein Heizsystem, dessen Regeleinheit zur Bereitstellung der Operationen zur Durchführung eines derartigen Verfahrens ausgebildet ist, zur Verfügung stellen, die mindestens einen Nachteil des Stands der Technik überwinden. Insbesondere soll das erfindungsgemäße Verfahren auch mit einem Heizsystem durchgeführt werden, das thermoelektrische Zweipunkt-Antriebe zur Betätigung der Ventile der jeweiligen Wärmetauscher verwendet.

Diese und andere Aufgaben werden durch ein Verfahren mit den Merkmalen des Anspruchs 1 bzw. durch ein Heizsystem mit den Merkmalen des Anspruchs 9 gelöst. Bevorzugte Ausführungsformen des erfindungsgemäßen Verfahrens sind in den abhängigen Ansprüchen beschrieben.

Gemäß der vorliegenden Erfindung wurde erkannt, dass durch Analyse des Regelverhaltens der Raumtemperaturregelung unter Berücksichtigung der vom Nutzer gewünschten Raumtemperatursollwerte sowie unter Berücksichtigung der gegenüber der ursprünglichen Anlagenplanung veränderten Rahmenbedingungen für jeden der zu versorgende Räume eine raumspezifische Kennzahl ermittelt werden kann, die auf die Ansteuerung der Stellantriebe so angewendet wird, dass eine an den tatsächlichen Bedarf angepasste Versorgung der Räume gewährleistet wird. Dazu umfasst das erfindungsgemäße Verfahren folgende Schritte:
Zunächst wird während einer Lernphase für jeden Raum des Gebäudes ermittelt, ob die Beheizung des Raums ausreichend ist oder ob eine Über- oder Unterversorgung des jeweiligen Raums erfolgt. Aus dem Ergebnis wird ein Korrekturwert für die Regelung der Raumtemperatur abgeleitet. Der Begriff "Lernphase" wie hierin verwendet bezeichnet dabei einen Zeitraum des ersten Heizbetriebs eines Heizsystems nach der Installation der Regeleinheit oder nach Beginn einer neuen Heizperiode. Die Lernphase beträgt dabei mindestens eine Woche und vorzugsweise mindestens zwei Wochen. Die Lernphase sollte nach spätestens vier Wochen, vorzugsweise nach spätestens drei Wochen abgeschlossen sein.

Danach kann in einem optionalen Zwischenschritt eine Plausibilitätsprüfung erfolgen: Dazu werden die den jeweiligen Raum ermittelten Korrekturwerte verglichen und anhand der ermittelten Korrekturwerte entschieden, ob in der Anlage (a) eine generelle Über- oder Unterversorgung vorliegt, oder ob (b) einzelne Räume eine Über- oder Unterversorgung aufweisen. Wenn Fall (b), d. h. einzelne Räume in Aufheizphasen über- oder unterversorgt sind, werden im nächsten Schritt die ermittelten raumspeifischen Korrekturwerte auf einen sogenannten Raumfaktor umgerechnet, der einen Wert zwischen 0% und 100% annehmen kann. Dieser Raumfaktor wird auf die Ansteuerung der Stellantriebe, die über Ventile den Zustrom an Temperiermedium für die Wärmetauscher der Räume kontrollieren, so angewendet, dass über den durch die Regelungstechnik errechneten Zeitraum für die Öffnung der Ventile sich eine dem jeweiligen Raumfaktor entsprechende Dimensionierung des Zustroms an Temperiermedium ergibt, die auf den durch den Raumfaktor vorgegebenen prozentualen Anteil des ursprünglichen Werts begrenzt ist. Durch diese Reduktion des Zustroms an Temperiermedium von überversorgten Räumen wird durch die dadurch erfolgende Einflussnahme auf die hydraulischen Verhältnisse gleichzeitig der Zustrom an Temperiermedium in die unterversorgten Räume erhöht.

Dementsprechend liegt die vorliegende Erfindung in der Bereitstellung eines Verfahrens zur Durchführung eines hydraulischen Abgleichs eines Heizsystems für ein Gebäude, das ein ein Temperiermedium erwärmendes Temperierelement, optional eine Umwälzpumpe, mehrere mit dem Temperierelement und ggf. der Umwälzpumpe verbundene Wärmetauscher r, wobei jeder Wärmetauscher einem Raum des Gebäudes zugeordnet ist und jedem Wärmetauscher ein den Durchfluss des Temperiermediums durch diesen Wärmetauscher regelndes Ventil mit einem diesem Ventil zugeordneten Stellantrieb zugeordnet ist, sowie mindestens eine Regeleinheit, die die Stellantriebe der Ventile durch Pulsweitenmodulation steuert, umfasst, wobei das Verfahren die folgenden Stufen umfasst:

(a) Ermittlung von raumspezifischen Korrekturwerten für die voreingestellten Parameter der Regeleinheit zumindest während einer Lernphase des Heizbetriebs, die es während der Ausregelphase des Heizsystems, in denen den einzelnen Wärmetauschern Energie zugeführt wird, ermöglichen die Raumtemperatur in dem diesem Wärmetauscher zugeordneten Raum innerhalb eines vorgegebenen Intervalls um einen für den jeweiligen Raum vorgegebenen Raumtemperatursollwert zu halten; und

(b) Reduzieren des über den Öffnungszeitraum der Ventile zeitlich gemittelten Durchflusses an Temperiermedium derjenigen Wärmetauscher, bei denen die in Stufe (a) ermittelten Korrekturwerte gegenüber den entsprechenden anfänglichen Parametern eine Reduzierung der den Wärmetauschern zugeführten Energiemenge bewirken,

wobei die in Stufe (a) ermittelten raumspezifischen Korrekturwerte der Parameter des Regelungssystems die Reihenfolge des Beginns der Zykluszeit der Pulsweitenmodulation der Wärmetauscher bestimmt, wobei derjenige Wärmetauscher, bei dem der Korrekturwert gegenüber den anfänglichen Parametern die größte Reduzierung der den Wärmetauschern zugeführten Energiemenge bewirkt, bevorzugt am Ende der Reihenfolge steht.

Darüber hinaus liegt die vorliegende Erfindung in der Bereitstellung eines Heizsystems für ein Gebäude, das ein ein Temperiermedium erwärmendes Temperierelement, optional eine Umwälzpumpe, mehrere mit dem Temperierelement und ggf. der Umwälzpumpe verbundene Wärmetauscher, wobei jeder Wärmetauscher einem Raum des Gebäudes zugeordnet ist und jedem Wärmetauscher ein den Durchfluss des Temperiermediums durch den Wärmetauscher regelndes Ventil mit einem diesem Ventil zugeordneten Stellantrieb zugeordnet ist, sowie mindestens eine Regeleinheit, die die Stellantriebe der Ventile steuert, umfasst, wobei die Regeleinheit zur Bereitstellung der Operationen zur Durchführung eines erfindungsgemäßen Verfahrens ausgebildet ist.

Hinsichtlich des erfindungsgemäßen Verfahrens kann es von Vorteil sein, wenn das Reduzieren des zeitlich gemittelten Durchflusses in Stufe (b) nach einem Sollwertwechsel für den jeweiligen Raum hin zu einem höheren Raumtemperatursollwert für diesen Raum bis zum Erreichen des erhöhten Raumtemperatursollwerts erfolgt. Dadurch ist es möglich. Diese Maßnahme dient zum Abfangen hydraulischer Spitzenlasten, also wenn mehreren Wärmetauschern zur selben Zeit eine große Menge an Wärmeträgermedium zugeführt werden muss, um eine zeitnahe Erhöhung der Raumtemperatur der betreffenden Räume zu bewirken.

Ebenso kann es hilfreich sein, wenn das Reduzieren des zeitlich gemittelten Durchflusses in Stufe (b) durch Verringern des Öffnungsgrades der den entsprechenden Wärmetauschern zugeordneten Ventile erfolgt. Dies stellt die für stetige Stellantriebe bevorzugte Variante der Verringerung des Durchflusses durch das dem jeweiligen Stellantrieb zugeordnete Ventil dar.

Es kann auch günstig sein, wenn das Reduzieren des zeitlich gemittelten Durchflusses in Stufe (b) durch sich abwechselndes Öffnen und Schließen der Ventile erfolgt. Dies stellt die für thermoelektrische Stellantriebe bevorzugte Variante der Verringerung des Durchflusses durch das dem jeweiligen Stellantrieb zugeordnete Ventil dar.

Ebenso kann es von Nutzen sein, wenn die Regeleinheit als PI-Regler ausgebildet ist und der Integralanteil in Stufe (a) zur Ermittlung der Korrekturwerte für die einzelnen Wärmetauscher herangezogen wird. Für die bevorzugt verwendeten PI-Regler ist der Integralanteil ein einfach zu erhaltender möglicher Korrekturwert.

Es kann auch vorteilhaft sein, wenn das Reduzieren des zeitlich gemittelten Durchflusses in Stufe (b) für den jeweiligen Wärmetauscher nur dann erfolgt, wenn die Gesamtöffnungszeit innerhalb einer Periodendauer der Pulsweitenmodulation einen Anteil von 50% der gesamten Periodendauer, vorzugsweise 70% der gesamten Periodendauer, überschreitet und gleichzeitig andere Wärmetauscher eine Gesamtöffnungszeit innerhalb einer Periodendauer der Pulsweitenmodulation von mehr als 50% aufweisen. Auch diese Maßnahme dient zum Abfangen hydraulischer Spitzenlasten.

Erfindungsgemäß bestimmen die in Stufe (a) ermittelten raumspezifischen Korrekturwerte der Parameter des Regelungssystems die Reihenfolge des Beginns der Zykluszeit der Pulsweitenmodulation der Wärmetauscher, wobei derjenige Wärmetauscher, bei dem der Korrekturwert gegenüber den anfänglichen Parametern die größte Reduzierung der den Wärmetauschern zugeführten Energiemenge bewirkt, bevorzugt am Ende der Reihenfolge steht. Auf diese Weise kann eine Priorisierung tendenziell unterversorgter Räume erfolgen.

Ebenso kann es sich als hilfreich erweisen, wenn die in Stufe (a) ermittelten raumspezifischen Korrekturwerte der Parameter des Regelungssystems für die in Stufe (b) beschriebene Reduzierung des über den Öffnungszeitraum der Ventile zeitlich gemittelten Durchflusses an Temperiermedium nur für die Wärmetauscher verwendet werden, deren Temperaturgradient bei einem Aufheizvorgang über dem Durchschnittswert der Gradienten aller Wärmetauscher liegt. Diese Maßnahme stellt einen bevorzugten, optionalen Zwischenschritt zwischen Stufe (a) und Stufe (b) des erfindungsgemäßen Verfahrens dar. Dadurch kann wirksam verhindert werden, bereits ausreichend mit Wärmeträgermedium versorgte Räume mit einer noch höheren Menge an Temperiermedium versorgt werden. Dies dient dem durch das erfindungsgemäße Heizsystem generierten Komfort und verringert dessen Energieverbrauch.

Es kann auch von Nutzen sein, wenn die Ermittlung von raumspezifischen Korrekturwerten für die voreingestellten Parameter der Regeleinheit während einer Lernphase des Heizbetriebs in Stufe (a) erstmalig während der Lernphase erfolgt. Vorzugsweise kann diese Ermittlung anschließend periodisch, vorzugsweise kontinuierlich durchgeführt werden. Auf diese Weise ist gewährleistet, dass bei Änderungen an der Regeleinheit, beispielsweise Änderungen des Raumtemperatursollwerts für einen Raum, oder bei Änderungen an den äußeren Bedingungen für das Heizsystem, beispielsweise Verlegen eines den Wärmeaustausch zwischen dem entsprechenden Wärmetauscher und dem Raum beeinflussenden Bodenbelags auf dem Estrich, unter dem der Heizkreis verläuft, eine entsprechende Anpassungen der hydraulischen Verhältnisse erfolgt.

Im Folgenden werden die einzelnen Stufen des erfindungsgemäßen Verfahrens am Ausführungsbeispiel eines Fußbodenheizungssystems unter Bezugnahme auf die Figuren im Detail erläutert. Dabei versteht es sich, dass die vorliegende Erfindung jedoch nicht darauf beschränkt ist, sondern entsprechend für Heizungssysteme anwendbar ist, die zur Beheizung der Räume andere Arten von Wärmetauscher, wie z. B. Heizkörper oder dergleichen, verwenden. Ebenso kann die vorliegende Erfindung für den Betrieb einer Anlage zum Zweck der Kühlung der Räume eingesetzt werden. Es zeigen:

Fig. 1 eine schematische Darstellung eines Heiz- und/oder Kühlsystems zur Durchführung eines Verfahrens gemäß einer Ausführungsform der vorliegenden Erfindung;

Fig. 2 ein exemplarisches Diagramm eines Ausgangssignals des Proportionalreglers bei negativer Verschiebung des Proportionalbandes;

Fig. 3 ein exemplarisches Diagramm eines Ausgangssignals des Proportionalreglers bei positiver Verschiebung des Proportionalbandes;

Fig. 4 ein exemplarisches Diagramm von Regelsignalen eines PI-Regler bei einem Aufheizvorgang;

Fig. 5 ein exemplarisches Diagramm eines zeitlichen Verlaufs eines pulsweitenmodulierten Signals;

Fig. 6 ein Flussdiagramm zu Stufe (a) gemäß einer Ausführungsform des erfindungsgemäßen Verfahrens;

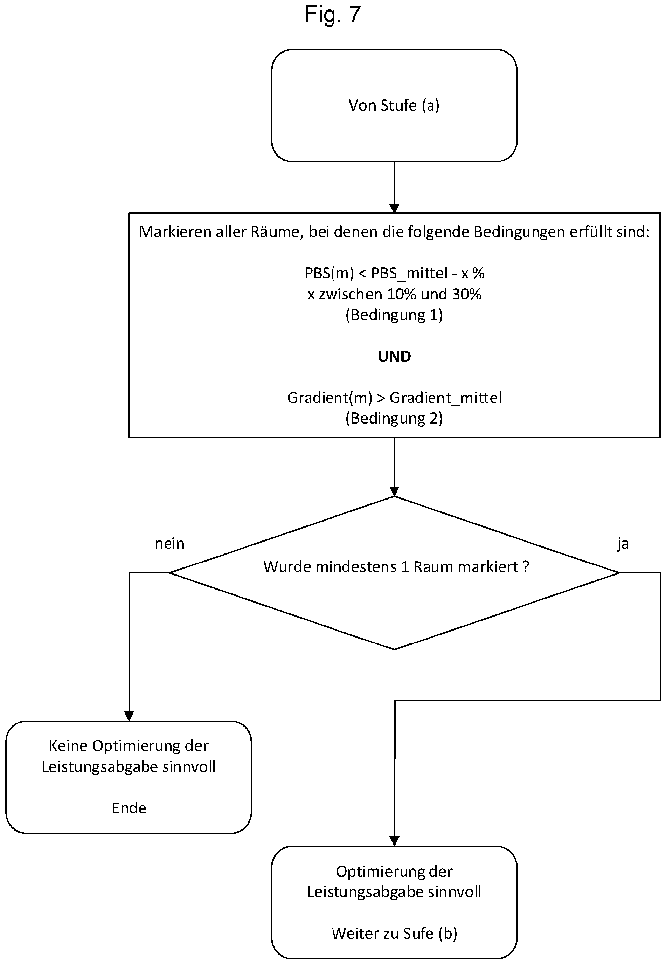

Fig. 7 ein Flussdiagramm zu einem optionalen Zwischenschritt gemäß einer bevorzugten Ausführungsform des erfindungsgemäßen Verfahrens;

Fig. 8 ein Flussdiagramm zu Stufe (b) gemäß einer Ausführungsform des erfindungsgemäßen Verfahrens; und

Fig. 9 ein exemplarisches Diagramm zur Ermittlung des Raumfaktors aus der Proportionalbandverschiebung in einer Ausführungsform des erfindungsgemäßen Verfahrens.

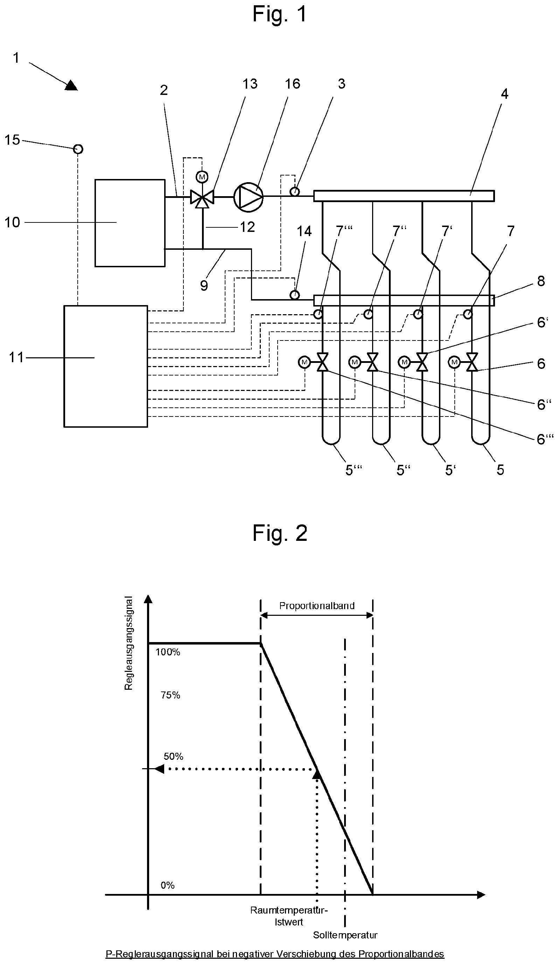

In Fig. 1 ist ein Heizsystem 1 in Form einer Fußbodenheizung zur Durchführung eines Verfahrens gemäß einer Ausführungsform der vorliegenden Erfindung schematisch dargestellt. In dem Heizsystem 1 wird ein Temperiermedium (z.B. Wasser oder ein Wasser/Glykol-Gemisch) entlang einer Vorlaufleitung 2 mit einem Vorlauf-Temperaturfühler 3 zu einem Vorlauf-Heizkreisverteiler 4 geleitet. Der Vorlauf-Heizkreisverteiler 4 verteilt das Temperiermedium auf mehrere Wärmetauscher 5, 5', 5", 5''', die in der vorliegenden Ausführungsform jeweils als in Estrich eingebettete Heizkreise 5, 5', 5", 5''' ausgebildet sind. Die Heizkreise 5, 5', 5", 5''' führen das Temperiermedium durch die Flächen, durch die der betreffende Raum beheizt oder gekühlt werden soll. Dabei können auch zwei oder mehr Wärmetauscher 5, 5', 5", 5''' einem Raum zugeordnet sein. Dies kann insbesondere bei relativ großen Räumen oder Räumen mit einem hohen Heizbedarf der Falls ein.

Die als Heizkreise ausgebildeten Wärmetauscher 5, 5', 5", 5''' umfassen jeweils ein Ventil 6, 6', 6", 6''' mit einem diesem zugeordneten Stellantrieb, einen Vorlauf, einen Verbraucher (bei Fußbodenheizungen beispielsweise der Estrich des zu beheizenden oder zu kühlenden Raums, bei Heizungssystem mit Heizkörpern ein Heizkörper) und einen Rücklauf mit einem Rücklauf-Temperaturfühler 7, 7', 7", 7'''. Die Wärmetauscher 5, 5', 5", 5''' münden in einem Rücklauf-Heizkreisverteiler 8. Vom Rücklauf-Heizkreisverteiler 8 fließt das Temperiermedium durch eine Rücklaufleitung 9 zurück zu einem Temperierelement 10 zur Erwärmung oder Abkühlung des Temperiermediums (z. B. eine Wärmepumpe oder eine Brennwerttherme).

Die Ventile 6, 6', 6", 6''' und die diesen zugeordneten Stellantriebe sind im Rücklauf der einzelnen Wärmetauscher 5, 5', 5", 5''' angeordnet und steuern dort den Durchfluss des Temperiermediums durch die einzelnen Wärmetauscher 5, 5', 5", 5'''. Eine Regeleinheit 11 ist signalleitend mit den einzelnen Stellantrieben verbunden und steuert ihren Betrieb. Alternativ können die Ventile 6, 6', 6", 6''' und die diesen zugeordneten Stellantriebe auch dem Vorlauf der einzelnen Wärmetauscher 5, 5', 5", 5'''zugeordnet sein. Darüber hinaus kann das Heiz- und/oder Kühlsystem 1 weiter optional eine Umwälzpumpe 16 und/oder eine Verbindung 12 zwischen der Vorlaufleitung 2 und der Rücklaufleitung 9 umfassen, wobei die Verbindung 12 mit einem Mischventil 13 versehen sein kann. Die separate Umwälzpumpe und/oder die Verbindung 12 zwischen der Vorlaufleitung 2 und der Rücklaufleitung 9 sind nicht in jeder Ausführungsform des Heiz- und/oder Kühlsystem 1 zwingend notwendig.

Über den Vorlauf-Temperaturfühler 3 wird die Temperatur des Temperiermediums in der Vorlaufleitung 2 gemessen und an die Regeleinheit 11 übermittelt. Gleichermaßen misst ein der Rücklaufleitung 9 zugeordneter Rücklauf-Temperaturfühler 14 die Temperatur des Temperiermediums in der Rücklaufleitung 9 und übermittelt diese an die Regeleinheit 11. Die Regeleinheit 11 kann die Temperatur des Temperiermediums in der Vorlaufleitung 2 beispielsweise regeln, indem das Mischventil 13 entsprechend gesteuert wird. Ebenso kann ein Außentemperaturfühler 15 die Außentemperatur ermitteln und diese wiederum an die Regeleinheit 11 weitergeben.

Die Verrohrung der Vorlaufleitung 2, der Wärmetauscher 5, 5', 5", 5''' sowie der Rücklaufleitung 9 besteht typischerweise z. B. aus Kunststoffrohren aus vernetztem Polyethylen, die mit einer Sauerstoffsperrschicht versehen sind.

Das Heiz- und/oder Kühlsystem 1 verteilt die in den einzelnen Räumen erforderliche Wärmemenge bei einer Fußbodenheizung dadurch, dass durch die Ventile 6, 6', 6", 6''' der Zufluss an Temperiermedium mit einer bestimmten Temperatur in den jeweiligen Wärmetauscher 5, 5', 5", 5''' im Boden geregelt/gesteuert wird. In der Regel wird ein Heizkreis 5, 5', 5", 5''' pro Raum verwendet, wobei die Wärmeversorgung eines entsprechend großen Raums auch zwei oder mehr Wärmetauscher 5, 5', 5", 5''' erfordern kann. Die Regeleinheit 11 sendet entsprechende Signale an die Stellantriebe der Ventile 6, 6', 6", 6''' diese für einen entsprechenden Zeitraum zu öffnen und wieder zu schließen. Man spricht von der Öffnungszeit T(open) der Ventile 6, 6', 6", 6'''.

Die Regeleinheit 11 verarbeitet die zu den einzelnen zu regelnden Räumen vorhandenen Informationen, also die vorgegebenen Sollwerte sowie die von Raumtemperaturfühlern gemeldeten Istwerte der Raumtemperaturen. Ein in der Regeleinheit 11 implementierter Regelungsalgorithmus erzeugt daraus ein Regelsignal, das von den Ausgängen der Regeleinheit 11 über Stellantriebe an Ventile 6, 6', 6'', 6''' der Wärmetauscher 5, 5', 5'', 5''' übermittelt wird. Hierzu wird ein an sich bekanntes Pulsweitenmodulationsverfahren eingesetzt. Dies stellt die Grundfunktion der Regeleinheit 11 dar, die an sich selbständig das Heiz- und/oder Kühlsystem 1 regeln kann. Um für eine für jeden Belastungsfall angepasste Wärmeversorgung der einzelnen Räume durch die Wärmetauscher 5, 5', 5'', 5''' zu gewährleiten, werden diese Pulsweitenmodulationsalgorithmen der Raumtemperaturregelung einer Korrektur unterzogen.

Die für die Regelung der Raumtemperaturen verwendete Regeleinheit 11 ist vorzugsweise ein Proportional-Integralregler (im Folgenden als PI-Regler bezeichnet), also eine Kombination aus einem Proportionalregler und einem Integralregler. Das Regelsignal eines Proportionalreglers wird durch die Lage der zu regelnden Größe relativ zu dem Proportionalband, der Proportionalbandbreite sowie durch den festgelegten Wirksinn des Reglerausgangssignals des Proportionalreglers bestimmt. Dabei bezeichnet der Wirksinn des Reglerausgangssignals die Richtung, in die sich das Reglerausgangssignal bei gleichbleibendem Sollwert und sich änderndem Istwert ändert. Wenn sich der Istwert erhöht und das Reglerausgangssignal abnimmt, spricht man von inversem Wirksinn. Nimmt das Reglerausgangssignal dagegen zu, wenn der Istwert sich erhöht, spricht man von direktem Wirksinn. Bei einem Regler, der die Beheizung eines Raumes durch das Öffnen eines Ventils regelt, welches den Zufluss eines Heizmediums bestimmt, ist der Wirksinn invers. Das Reglerausgangssignal ist das Signal, mit dem die Regeleinheit 11 die Stellantriebe der jeweiligen Ventile 6, 6', 6'', 6''' der Wärmetauscher 5, 5', 5'', 5''' ansteuert.

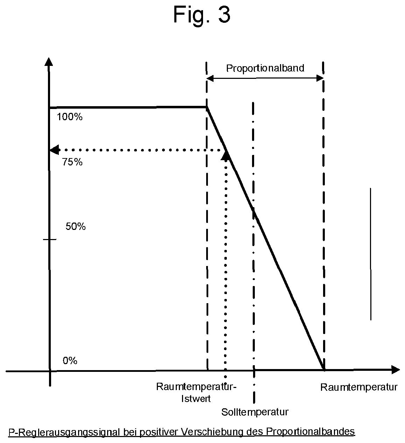

Das Regelsignal des Proportionalreglers nimmt einen Wert zwischen 0 und 100% an, wobei das Regelsignal außerhalb des Proportionalbandes, bestimmt durch den Wirksinn sowie der Lage zu dem Proportionalband, den Wert 100% oder 0% annimmt. Bei Eintritt der zu regelnden Größe in den Beginn des Proportionalbands bis zu dem Verlassen des Proportionalbandes am Ende des Proportionalbandes verändert sich das Regelsignal wiederum bestimmt durch den Wirksinn sowie durch die Richtung, in der das Proportionalband durchlaufen wird, von dem Anfangswert 100% bis zu dem Wert 0% bzw. von dem Wert 0% zu dem Wert 100%, wobei eine vorzugsweise lineare Abhängigkeit zwischen dem Regelsignal und der Lages des zu regelnden Werts innerhalb des Proportionalbandes besteht, was in Figur 2 und Figur 3 gezeigt ist. Das Proportionalband befindet sich in einer festlegbaren Position zum Sollwert der zu regelnden Größe und kann sich oberhalb, unterhalb oder um den Sollwert herum befinden.

Eine wesentliche Charakteristik des Proportionalreglers ist die sofortige, also verzögerungsfreie Reaktion des Regelsignals auf eine Veränderung des Sollwertes oder des Istwertes. Die Breite des Proportionalbands bestimmt dabei, wie stark die Reaktion des Proportionalreglers auf die Regelabweichung erfolgt.

Das Regelsignal eines Integralreglers ist die zeitliche Integration der Regelabweichung, also der Differenz zwischen aktuellem Wert und angestrebtem Sollwert, gewichtet durch die Nachstellzeit. Je größer die Nachstellzeit gewählt ist, desto langsamer verändert sich das Regelsignal bei einer gleichbleibenden Regelabweichung.

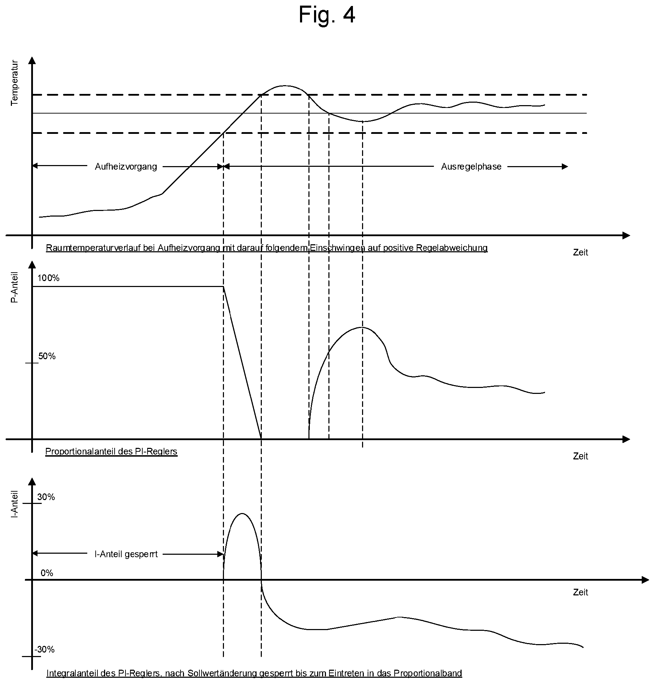

Eine wesentliche Charakteristik des Integralreglers ist die nicht sprungartige Reaktion des Regelsignals auf eine Veränderung des Sollwertes oder des Istwertes. Das Regelsignal eines Integralreglers ist damit proportional zu einem durch die Nachstellzeit beeinflussten Mittelwert der Regelabweichung einer zurückliegenden Zeitspanne. Da der Integralanteil unbegrenzt anwachsen kann wird er auf einen definierten Maximalwert, zum Beispiel 50%, begrenzt. Üblicherweise wird für die Raumtemperaturregelung eines Flächenheizunssystems eine Kombination aus einem Proportionalregler und einem Integralregler, genannt PI-Regler, eingesetzt. Figur 4 zeigt die Regelsignale der beiden Reglertypen bei einem typischen Beispiel eines Aufheizvorgangs. Das Gesamtsignal des PI-Reglers ergibt sich aus der Aufsummierung der beiden Signale, wobei das resultierende Signal auf den Bereich 0% bis 100% begrenzt wird.

Zur Verbesserung des Regelergebnisses wird vorzugsweise der Einfluss des Integralanteils auf einen Maximalwert begrenzt. Dieser Maximalwert ist von dem durch die Regeleinheit 11 zu regelnden Heizsystem 1 abhängig.

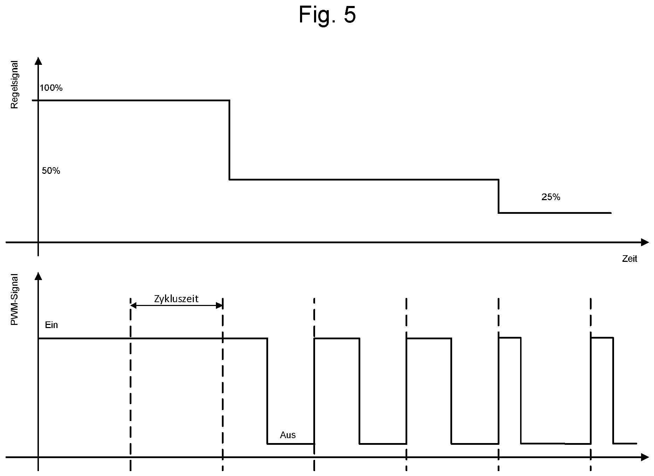

Das stetige Ausgangssignal des PI-Reglers, welches zwischen 0% und 100% liegt, kann in ein pulsweitenmoduliertes Signal mit den beiden Zuständen aktiv und nicht aktiv umgesetzt. Dabei wird als Basis eine Zykluszeit festgelegt, und die aktive Zeit des Signals entspricht in ihrer Dauer dem auf die gesamte Zykluszeit angewendeten Prozentsatz des Regelsignals. Die Zykluszeit wird abhängig von dem betriebenen Heizsystem gewählt, bei einem Fußbodenheizungssystem wird für die Zykluszeit typischerweise ein Wert zwischen 15 und 40 Minuten gewählt. Für den restlichen Zeitraum der Zykluszeit ist das Signal inaktiv. Nach Ablauf der Zykluszeit startet die nächste Zykluszeit und damit die erneute Zeit des aktiven Zustands. Die Methode der Pulsweitenmodulation bietet somit die Möglichkeit, ein stetiges Regelsignal in ein Regelsignal umzusetzen, welches nur die beiden Zustände "aktiv" und "nicht aktiv" kennt. Dieses pulsweitenmodulierte Signal wird für die Ansteuerung der bereits erwähnten thermoelektrischen Antriebe verwendet. Ein exemplarischer zeitlicher Verlauf eines solchen pulsweitenmodulierten Signals ist in dem Diagramm gemäß Figur 5 gezeigt.

Das Ermitteln der raumindividuellen Korrekturwerte kann bei Verwendung eines PI-Reglers bevorzugt auf Basis des Integralanteils in der Lernphase für jeden Raum einmal täglich zu einem bestimmten Zeitpunkt, wobei der Integralanteil, solange sich der Istwert der Raumtemperatur außerhalb des Proportionalbandes befindet, zu Null gesetzt wird.

Diese Phase wird als Aufheizphase bezeichnet. Erst beim Eintreten in das Proportionalband wird die Berechnung des Integralanteils gestartet. Die dann beginnende Phase des Betriebs wird als Ausregelphase bezeichnet.

Der Zeitpunkt für die Verwendung des Integralanteils zur Bestimmung des Korrekturwertes wird so gewählt, dass er in der Mitte der vom Nutzer über ein Zeitprogramm vorgegebenen Anwesenheitszeit liegt. Sollte kein Zeitprogramm verwendet werden, so wird der Zeitpunkt auf den Nachmittag, zum Beispiel auf 17h, gelegt. Zu dem gewählten Zeitpunkt wird der Wert des Integralanteils des Regelsignals betrachtet. Sollte der Betrag des Integralsignals einen Wert von 80% des festgelegten Maximalwerts überschreiten, so wird die Lage des Proportionalbandes für diesen Raum in kleinen Schritten, z.B. in Schritten von 5% angepasst. Für positive Integralanteile erfolgt eine Verschiebung des Proportionalbandes in positiver Richtung, bei negativen Integralanteilen in negativer Richtung.

Durch diesen Korrekturschritt übernimmt der Proportionalregler einen Teil des Signals, welches durch den Integralregler ab dem Zeitpunkt, in dem sich die Raumtemperatur im Proportionalband befindet, also in der als Regelbetrieb bezeichneten Phase, erzeugt wurde. Um Störeinflüsse z.B. durch Sonneneinstrahlung oder zeitweilig auftretende innere Lasten zu reduzieren, erfolgen die Optimierungsschritte über mehrere Tage, z.B. über eine Woche hinweg. Der Gesamtbetrag der Proportionalbandverschiebung darf dabei in bevorzugten Ausführungsformen einen Maximalwert von 50% nicht überschreiten.

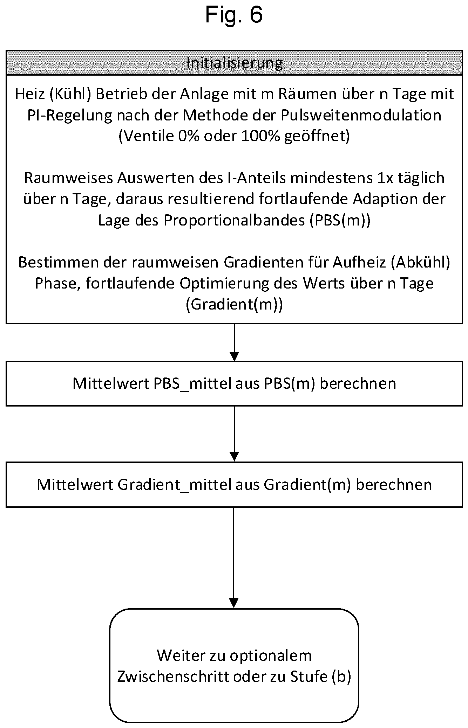

Ein Flussdiagramm zu Stufe (a) gemäß einer Ausführungsform des erfindungsgemäßen Verfahrens ist in Figur 6 dargestellt. Dabei liegt am Ende der bevorzugt etwa einwöchigen Lernphase für jeden Raum eine gegenüber dem ursprünglichen Wert veränderte Positionierung des Proportionalbandes vor. Räume, die überversorgt sind, weisen eine negative Proportionalbandverschiebung, Räume, die unterversorgt sind, eine positive Proportionalbandverschiebung auf.

Die raumweise ermittelte Proportionalbandverschiebung stellt den raumindividuellen Korrekturwert für den Proportionalanteil des PI-Reglers dar und wird als Eingangsgröße für den folgenden Schritt verwendet.

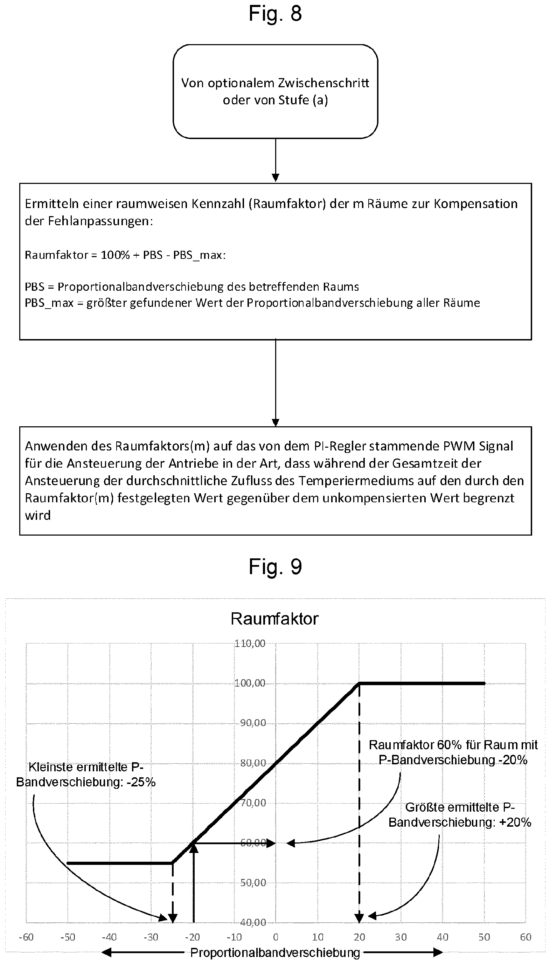

Ein Flussdiagramm zu Stufe (b) gemäß einer Ausführungsform des erfindungsgemäßen Verfahrens ist in Figur 8 gezeigt. Dazu wird für den optimierten Betrieb wird für jeden Raum eine Kennzahl, im Folgenden Raumfaktor genannt, ermittelt, die das Maß wiedergibt, in dem eine Reduzierung der Durchströmung der Wärmetauscher erzielt werden soll.

Die Ermittlung dieser Kennzahl geschieht nach folgender Formel:

$$\text{Raumfaktor des Raums} = 100\% + PBS - PBS\_max,$$

wobei PBS die Proportionalbandverschiebung dieses Raums ist und PBS_max die größte Proportionalbandverschiebung aller Räume ist.

Der so ermittelte Raumfaktor gibt damit für jeden Raum eine Prozentzahl an, auf die der Durchfluss durch den oder die Wärmetauscher dieses Raums gegenüber dem unkompensierten Wert begrenzt werden soll.

Für das weitere Vorgehen umfassen die bevorzugten Optionen, die korrigierende Maßnahmen an der Hydraulik, also eine Reduzierung der Zufuhr an Temperiermedium, bei allen Räumen mit Ausnahme des Raumes mit der größten Unterversorgung vorzunehmen oder nur bei einer Auswahl von Räumen, die als Räume mit einer deutlich erkannten Überversorgung identifiziert werden.

Soll die Zufuhr an Temperiermedium nur bei einer derartigen Auswahl von Räumen erfolgen, kann dies beispielsweise wie folgt realisiert werden: Zunächst wird der Mittelwert der Proportionalbandverschiebung PBS_mittel aller Räume gebildet. Dann wird überprüft, ob Räume existieren, bei denen die Proportionalbandverschiebung um einen Wert x unter dem Mittelwert der Proportionalbandverschiebung PBS_mittel liegen, wobei für x bevorzugt ein Wert zwischen 10% und 30% gewählt wird. Die so erkannten Räume weisen eine Überversorgung auf, die über einem Schwellenwert liegt und es besteht bei einer Variante des beschriebenen Verfahrens die Möglichkeit, nur diese Räume für die weiteren Schritte zu berücksichtigen.

In dieser Verfahrensvariante besteht zusätzlich die bevorzugte Möglichkeit, ein zweites Kriterium bei der Auswahl der zu berücksichtigenden Räume zusätzlich anzuwenden: Während der Lernphase wird parallel ermittelt, mit welcher Geschwindigkeit der Aufheizvorgang der einzelnen Räume, als Aufheizgradient bezeichnet, bei einem Sollwertwechsel stattfindet. Von diesen Aufheizgradienten wird ebenfalls der Mittelwert über alle Räume gebildet. Nur diejenigen der im vorherigen Schritt ausgewählten Räume, deren Aufheizgradient einen Wert aufweist, der über dem Durchschnitt aller Räume liegt, werden im Weiteren berücksichtigt. Die dazu eingesetzte Vorgehensweise ist in dem Flussdiagramm gemäß Figur 8 dargestellt. Die Berechnung der Raumfaktoren für jeden Raum ist in Figur 9 dargestellt.

Diese Aufheizgradienten werden als zusätzliches Kriterium für die Beurteilung der Notwendigkeit, Maßnahmen zur Verbesserung der Anlagenhydraulik einzuleiten, verwendet. Für die je nach gewählter Verfahrensvariante ausgewählten Räume sollen für den weiteren, hinsichtlich der Anlagenhydraulik optimierten Betrieb, korrigierende Maßnahmen ergriffen werden. Sollte bei den vorhergehenden Verfahrensschritten kein Raum ausgewählt worden sein, so werden keine Maßnahmen für die Optimierung der Anlagenhydraulik durchgeführt.

Diese korrigierenden Maßnahmen, also die Reduzierung des Durchflusses an Temperiermedium, kann auf verschiedene Art erzielt werden: Beispielsweise werden in einer bevorzugten Variante des erfindungsgemäßen Verfahrens die Stellantriebe so angesteuert, dass die von ihnen betätigten Ventile 6, 6', 6″, 6‴ während der Ansteuerungszeit einen geringeren als den maximalen Öffnungsgrad aufweisen. Der gewünschte Öffnungsgrad entspricht dabei dem für den Raum ermittelten Raumfaktor.

In einer weiteren Variante des erfindungsgemäßen Verfahrens werden die Stellantriebe während der aktiven Zeit so angesteuert, dass sie in ständigem Wechsel das Ventil 6, 6', 6″, 6‴ öffnen und schließen, so dass der sich über den Gesamtzeitraum betrachtete Durchfluss durch den Raumfaktor begrenzt wird.

In einer weiteren bevorzugten Variante des erfindungsgemäßen Verfahrens wird eine der oben aufgeführten Methoden zur Reduzierung des Durchflusses der Heizkreise 5, 5', 5", 5‴ der überversorgten Räume nur dann durchgeführt, wenn zu erwarten ist, dass bei einem nicht reduzierten Durchfluss durch diese Heizkreise 5, 5', 5″, 5‴ der Durchfluss durch die Heizkreise 5, 5', 5″, 5‴ der anderen Räume reduziert wird. Hierzu wird beispielsweise folgendes Kriterium aufgestellt: Sollte die nach der Methode der Pulsweitenmodulation errechnete Öffnungszeit der Ventile 6, 6', 6″, 6‴ von mindestens einem Raum, der als überversorgt erkannt wurde, eine Zeitdauer von 70% der Pulsperiodendauer überschreiten und gleichzeitig bei mindestens einem der Räume, der als nicht überversorgt erkannt wurde, eine errechnete Öffnungszeit der Ventile 6, 6', 6″, 6‴ eine Zeitdauer von 50% der Pulsperiodendauer überschreiten, so wird eine Reduktion des Durchflusses der Heizkreise der überversorgten Räume angewendet.

Eine weitere Verbesserung der hydraulischen Verhältnisse in einer Anlage lässt sich erzielen, indem die Raumfaktoren verwendet werden, um daraus eine Reihenfolge für das Öffnen der Ventile 6, 6', 6″, 6‴ der Heizkreise 5, 5', 5″, 5‴ der verschiedenen Räume abzuleiten. Der Stellantrieb des dem Raum zugordneten Ventils 6, 6', 6″, 6‴ mit dem höchsten Raumfaktor wird bei Anwendung des erfindungsgemäßen Verfahrens der Pulsweitenmodulation als erster angesteuert, danach folgt nach einer Wartezeit von vorzugsweise 3 Minuten, mindestens jedoch 1 Minute, der Raum mit dem zweithöchsten Raumfaktor. Diese Schritte werden fortgeführt bis zu dem Raum mit dem niedrigsten Raumfaktor.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den Ansprüchen ergibt.

**Patentansprüche**

1. Verfahren zur Durchführung eines hydraulischen Abgleichs eines Heizsystems (1) für ein Gebäude, das ein ein Temperiermedium erwärmendes Temperierelement (10), optional eine Umwälzpumpe (16), mehrere mit dem Temperierelement (10) und ggf. der Umwälzpumpe (16) verbundene Wärmetauscher (5, 5', 5″, 5‴), wobei jeder Wärmetauscher (5, 5', 5″, 5‴) einem Raum des Gebäudes zugeordnet ist und jedem Wärmetauscher (5, 5', 5″, 5‴) ein den Durchfluss des Temperiermediums durch den Wärmetauscher (5, 5', 5″, 5‴) regelndes Ventil (6, 6', 6″, 6‴) mit einem diesem Ventil (6, 6', 6″, 6‴) zugeordneten Stellantrieb zugeordnet ist, sowie mindestens eine Regeleinheit (11), die die Stellantriebe der Ventile (6, 6', 6″, 6‴) durch Pulsweitenmodulation steuert, umfasst, wobei das Verfahren die folgenden Stufen umfasst:

   (a) Ermittlung von raumspezifischen Korrekturwerten für die voreingestellten Parameter der Regeleinheit (11) zumindest während einer Lernphase des Heizbetriebs, die es während der Ausregelphase des Heizsystems (1), in denen den einzelnen Wärmetauschern (5, 5', 5″, 5‴) Energie zugeführt wird, ermöglichen die Raumtemperatur in dem diesem Wärmetauscher (5, 5', 5″, 5‴) zugeordneten Raum innerhalb eines vorgegebenen Intervalls um einen für den jeweiligen Raum vorgegebenen Raumtemperatursollwert zu halten; und
   (b) Reduzieren des über den Öffnungszeitraum der Ventile (6, 6', 6″, 6‴) zeitlich gemittelten Durchflusses an Temperiermedium derjenigen Wärmetauscher (5, 5', 5″, 5‴), bei denen die in Stufe (a) ermittelten Korrekturwerte gegenüber den entsprechenden anfänglichen Parametern eine Reduzierung der den Wärmetauschern (5, 5', 5″, 5‴) zugeführten Energiemenge bewirken,

   **dadurch gekennzeichnet, dass**
   die in Stufe (a) ermittelten raumspezifischen Korrekturwerte für die voreingestellten Parameter der Regeleinheit (11) die Reihenfolge des Beginns der Zykluszeit der Pulsweitenmodulation der Wärmetauscher (5, 5', 5″, 5‴) bestimmen, wobei derjenige Wärmetauscher (5, 5', 5″, 5‴), bei dem der Korrekturwert gegenüber den voreingestellten Parametern die größte Reduzierung der den Wärmetauschern (5, 5', 5″, 5‴) zugeführten Energiemenge bewirkt, vorzugsweise am Ende der Reihenfolge steht.

2. Verfahren nach Anspruch 1, **dadurch gekennzeichnet, dass** das Reduzieren des zeitlich gemittelten Durchflusses in Stufe (b) nach einem Sollwertwechsel für den jeweiligen Raum hin zu einem höheren Raumtemperatursollwert für diesen Raum bis zum Erreichen des erhöhten Raumtemperatursollwerts erfolgt.

3. Verfahren nach Anspruch 1 oder Anspruch 2, **dadurch gekennzeichnet, dass** das Reduzieren des zeitlich gemittelten Durchflusses in Stufe (b) durch Verringern des Öffnungsgrades der den entsprechenden Wärmetauschern (5, 5', 5″, 5‴) zugeordneten Ventile (6, 6', 6″, 6‴) erfolgt.

4. Verfahren nach einem der Ansprüche 1 bis 3, **dadurch gekennzeichnet, dass** das Reduzieren des zeitlich gemittelten Durchflusses in Stufe (b) durch sich abwechselndes Öffnen und Schließen der Ventile (6, 6', 6″, 6‴) erfolgt.

5. Verfahren nach einem der Ansprüche 1 bis 4, **dadurch gekennzeichnet, dass** die Regeleinheit (11) als PI-Regler ausgebildet ist und der Integralanteil in Stufe (a) zur Ermittlung der Korrekturwerte für die einzelnen Wärmetauscher (5, 5', 5″, 5‴) herangezogen wird.

6. Verfahren nach einem der Ansprüche 1 bis 5, **dadurch gekennzeichnet, dass** das Reduzieren des zeitlich gemittelten Durchflusses in Stufe (b) für den jeweiligen Wärmetauscher (5, 5', 5″, 5‴) nur dann erfolgt, wenn die Gesamtöffnungszeit innerhalb einer Periodendauer der Pulsweitenmodulation einen Anteil von 50% der gesamten Periodendauer, vorzugsweise 70% der gesamten Periodendauer, überschreitet und gleichzeitig andere Wärmetauscher (5, 5', 5″, 5‴) eine Gesamtöffnungszeit innerhalb einer Periodendauer der Pulsweitenmodulation von mehr als 50% aufweisen.

7. Verfahren nach einem der Ansprüche 1 bis 6, **dadurch gekennzeichnet, dass** die in Stufe (a) ermittelten wärmetauscherindividuellen Korrekturwerte der Parameter des Regelungssystems für die in Stufe (b) beschriebene Reduzierung des über den Öffnungszeitraum der Ventile (6, 6', 6″, 6‴) zeitlich gemittelten Durchflusses an Temperiermedium nur für die Wärmetauscher (5, 5', 5″, 5‴) verwendet werden, deren Temperaturgradient bei einem Aufheizvorgang über dem Durchschnittswert der Gradienten aller Wärmetauscher (5, 5', 5″, 5‴) liegt.

8. Verfahren nach einem der Ansprüche 1 bis 7, **dadurch gekennzeichnet, dass** die Ermittlung von raumspezifischen Korrekturwerten für die voreingestellten Parameter der Regeleinheit (11) während einer Lernphase des Heizbetriebs in Stufe (a) erstmalig während der Lernphase erfolgt und anschließend periodisch, vorzugsweise kontinuierlich durchgeführt wird.

9. Heizsystem (1) für ein Gebäude, das ein ein Temperiermedium erwärmendes Temperierelement (10), optional eine Umwälzpumpe (16), mehrere mit dem Temperierelement (10) und ggf. der Umwälzpumpe (16) verbundene Wärmetauscher (5, 5', 5″, 5‴), wobei jeder Wärmetauscher (5, 5', 5″, 5‴) einem Raum des Gebäudes zugeordnet ist und jedem Wärmetauscher (5, 5', 5″, 5‴) ein den Durchfluss des Temperiermediums durch den Wärmetauscher (5, 5', 5″, 5‴) regelndes Ventil (6, 6', 6″, 6‴) mit einem diesem Ventil (6, 6', 6″, 6‴) zugeordneten Stellantrieb zugeordnet ist, sowie mindestens eine Regeleinheit (11), die die Stellantriebe der Ventile (6, 6', 6″, 6‴) steuert, umfasst, **dadurch gekennzeichnet, dass** die Regeleinheit (11) zur Bereitstellung der Operationen zur Durchführung eines Verfahrens nach einem der Ansprüche 1 bis 8 ausgebildet ist.

**Claims**

1. Method for carrying out a hydraulic adjustment of a heating system (1) for a building, comprising a temperature-control element (10) which heats a temperature-control medium, optionally a circulating pump (16), a plurality of heat exchangers (5, 5', 5″, 5‴) connected to the temperature-control element (10) and optionally the circulating pump (16), wherein each heat exchanger (5, 5', 5″, 5‴) is associated with one room of the building, and each heat exchanger (5, 5', 5″, 5‴) is associated with a valve (6, 6', 6″, 6‴) which controls the flow of the temperature-control medium through the heat exchanger (5, 5', 5″, 5‴) and comprises an actuator associated with said valve (6, 6', 6″, 6‴), and at least one control unit (11) which controls the actuators of the valves (6, 6', 6″, 6‴) by means of pulse width modulation, wherein the method comprises the following steps:

(a) determining room-specific correction values for the pre-set parameters of the control unit (11), at least during a learning phase of the heating operation, which make it possible, during the correction phase of the heating system (1) in which energy is supplied to the individual heat exchangers (5, 5', 5″, 5‴), to keep the room temperature in the room associated with said heat exchanger (5, 5', 5″, 5‴) within a specified interval around a room temperature target value specified for the relevant room; and
(b) reducing the flow of temperature-control medium, time-averaged over the opening time of the valves (6, 6', 6″, 6‴), of those heat exchangers (5, 5', 5″, 5‴) for which the correction values determined in step (a) bring about a reduction in the amount of energy supplied to the heat exchangers (5, 5', 5", 5‴) compared with the corresponding initial parameters,

**characterised in that**
the room-specific correction values, determined in step (a) for the pre-set parameters of the control unit (11), determine the sequence of the start of the cycle time of the pulse width modulation of the heat exchangers (5, 5', 5", 5‴), wherein the heat exchanger (5, 5', 5", 5‴) for which the correction value brings about the greatest reduction in the amount of energy supplied to the heat exchangers (5, 5', 5", 5‴), compared with the pre-set parameters, is preferably at the end of the sequence.

2. Method according to claim 1, **characterised in that** the reduction of the time-averaged flow in step (b) takes place after a target value change for the relevant room, towards a higher room temperature target value for this room, until the increased room temperature target value is reached.

3. Method according to either claim 1 or claim 2, **characterised in that** the reduction of the time-averaged flow in step (b) is carried out by reducing the degree of opening of the valves (6, 6', 6", 6‴) associated with the corresponding heat exchangers (5, 5', 5", 5‴).

4. Method according to any of claims 1 to 3, **characterised in that** the reduction of the time-averaged flow in step (b) is carried out by means of alternating opening and closing of the valves (6, 6', 6", 6‴).

5. Method according to any of claims 1 to 4, **characterised in that** the control unit (11) is designed as a PI controller, and the integral part is consulted in step (a) for determining the correction value for the individual heat exchangers (5, 5', 5", 5‴).

6. Method according to any of claims 1 to 5, **characterised in that** the reduction of the time-averaged flow in step (b) takes place, for the respective heat exchangers (5, 5', 5", 5‴), only if the total opening time within one period duration of the pulse width modulation exceeds a fraction of 50% of the entire period duration, preferably 70% of the entire period duration, and at the same time other heat exchangers (5, 5', 5", 5‴) have a total opening time, within one period duration of the pulse width modulation, of more than 50%.

7. Method according to any of claims 1 to 6, **characterised in that** the correction values, individual to the heat exchangers, determined in step (a), for the parameters of the control system, for the reduction, described in step (b), of the flow of temperature-control medium, time-averaged over the opening time of the valves (6, 6', 6", 6‴), are used only for the heat exchangers (5, 5', 5", 5‴) of which the temperature gradient during a heating process is above the average value of the gradients of all the heat exchangers (5, 5', 5", 5‴).

8. Method according to any of claims 1 to 7, **characterised in that** the determination of room-specific correction values for the pre-set parameters of the control unit (11), during a learning phase of the heating operation in step (a), takes place for the first time during the learning phase, and is subsequently carried out periodically, preferably continuously.

9. Heating system (1) for a building, comprising a temperature-control element (10) which heats a temperature-control medium, optionally a circulating pump (16), a plurality of heat exchangers (5, 5', 5", 5‴) connected to the temperature-control element (10) and optionally the circulating pump (16), wherein each heat exchanger (5, 5', 5", 5‴) is associated with one room of the building, and each heat exchanger (5, 5', 5", 5‴) is associated with a valve (6, 6', 6", 6‴) which controls the flow of the temperature-control medium through the heat exchanger (5, 5', 5", 5‴) and comprises an actuator associated with said valve (6, 6', 6", 6‴), and at least one control unit (11) which controls the actuators of the valves (6, 6', 6", 6‴),
**characterised in that**
the control unit (11) is designed to provide the operations for carrying out a method according to any of claims 1 to 8.

**Revendications**

1. Procédé pour réaliser un équilibrage hydraulique d'un système de chauffage (1) pour un bâtiment, qui comprend un élément de régulation de température (10) chauffant un fluide de régulation de température, éventuellement une pompe de circulation (16), plusieurs échangeurs de chaleur (5, 5', 5", 5‴) reliés à l'élément de régulation de température (10) et éventuellement à la pompe de circulation (16), chaque échangeur de chaleur (5, 5', 5", 5‴) étant associé à une pièce du bâtiment et chaque échangeur de chaleur (5, 5', 5", 5''') étant associé à une soupape (6, 6', 6", 6''') réglant le débit du fluide de conditionnement de température à travers l'échangeur de chaleur (5, 5', 5", 5''') avec un actionneur associé à cette soupape (6, 6', 6", 6'''), ainsi qu'au moins une unité de réglage (11) qui commande les actionneurs des soupapes (6, 6', 6", 6''') par modulation de largeur d'impulsion, le procédé comprenant les étapes suivantes :

(a) la détermination de valeurs de correction spécifiques à la pièce pour les paramètres préajustés de l'unité de réglage (11) au moins pendant une phase d'apprentissage du mode de chauffage, qui permettent pendant la phase de réglage du système de chauffage (1), dans laquelle de l'énergie est amenée aux échangeurs de chaleur (5, 5', 5", 5''') individuels, de maintenir la température ambiante dans la pièce associée à cet échangeur de chaleur (5, 5', 5", 5''') dans les limites d'un intervalle prédéfini autour d'une valeur de consigne de température ambiante prédéfinie pour la pièce respective ; et
(b) la réduction du débit de fluide de régulation de température, moyenné dans le temps sur la durée d'ouverture des soupapes (6, 6', 6", 6'''), des échangeurs de chaleur (5, 5', 5", 5''') pour lesquels les valeurs de correction déterminées à l'étape (a) entraînent une réduction de la quantité d'énergie amenée aux échangeurs de chaleur (5, 5', 5", 5''') par rapport aux paramètres initiaux correspondants,

**caractérisé en ce que**
les valeurs de correction spécifiques à la pièce déterminées à l'étape (a) pour les paramètres préajustés de l'unité de réglage (11) déterminent la séquence de début de la durée de cycle de la modulation de largeur d'impulsion des échangeurs de chaleur (5, 5', 5", 5'''), l'échangeur de chaleur (5, 5', 5", 5''') pour lequel la valeur de correction par rapport aux paramètres préajustés entraîne la plus grande réduction de la quantité d'énergie amenée aux échangeurs de chaleur (5, 5', 5", 5''') se trouvant de préférence à la fin de la séquence.

2. Procédé selon la revendication 1, **caractérisé en ce que** la réduction du débit moyenné dans le temps à l'étape (b) est effectuée après un changement de valeur de consigne pour la pièce respective vers une valeur de consigne de température ambiante plus élevée pour cette pièce jusqu'à ce que la valeur de consigne de température ambiante plus élevée soit atteinte.

3. Procédé selon la revendication 1 ou la revendication 2, **caractérisé en ce que** la réduction du débit moyenné dans le temps à l'étape (b) est effectuée par diminution du degré d'ouverture des soupapes (6, 6', 6", 6''') associées aux échangeurs de chaleur correspondants (5, 5', 5", 5''').

4. Procédé selon l'une quelconque des revendications 1 à 3, **caractérisé en ce que** la réduction du débit moyenné dans le temps à l'étape (b) est effectuée par l'ouverture et la fermeture alternées des soupapes (6, 6', 6", 6''').

5. Procédé selon l'une quelconque des revendications 1 à 4, **caractérisé en ce que** l'unité de réglage (11) est configurée sous forme de régulateur P1 et la partie intégrale est utilisée à l'étape (a) pour calculer les valeurs de correction pour les échangeurs de chaleur individuels (5, 5', 5", 5''').

6. Procédé selon l'une quelconque des revendications 1 à 5, **caractérisé en ce que** la réduction du débit moyenné dans le temps à l'étape (b) pour l'échangeur de chaleur respectif (5, 5', 5", 5''') n'est effectuée que si le temps d'ouverture total dans les limites d'une durée de période de la modulation de largeur d'impulsion dépasse une part de 50 % de la durée de période totale, de préférence 70 % de la durée de période totale, et en même temps, d'autres échangeurs de chaleur (5, 5', 5", 5''') présentent un temps d'ouverture total dans les limites d'une durée de période de la modulation de largeur d'impulsion de plus de 50 %.

7. Procédé selon l'une quelconque des revendications 1 à 6, **caractérisé en ce que** les valeurs de correction des paramètres du système de réglage pour chaque échangeur de chaleur, déterminées à l'étape (a), ne sont utilisées pour la réduction décrite à l'étape (b) du débit de fluide de régulation de température moyenné dans le temps sur la durée d'ouverture des soupapes (6, 6', 6", 6''') que pour les échangeurs de chaleur (5, 5', 5", 5''') dont le gradient de température lors d'une opération de chauffage est supérieur à la valeur moyenne des gradients de tous les échangeurs de chaleur (5, 5', 5", 5''').

8. Procédé selon l'une quelconque des revendications 1 à 7, **caractérisé en ce que** la détermination de valeurs de correction spécifiques à la pièce pour les paramètres préajustés de l'unité de réglage (11) pendant une phase d'apprentissage du mode de chauffage à l'étape (a) est effectuée pour la première fois pendant la phase d'apprentissage et est ensuite réalisée périodiquement, de préférence de manière continue.

**9.** Système de chauffage (1) pour un bâtiment, qui comprend un élément de régulation de température (10) chauffant un fluide de régulation de température, éventuellement une pompe de circulation (16), plusieurs échangeurs de chaleur (5, 5', 5″, 5‴) reliés à l'élément de régulation de température (10) et éventuellement à la pompe de circulation (16), chaque échangeur de chaleur (5, 5', 5″, 5‴) étant associé à une pièce du bâtiment, et chaque échangeur de chaleur (5, 5', 5″, 5‴) étant associé à une soupape (6, 6', 6″, 6‴) réglant le débit du fluide de régulation de température à travers l'échangeur de chaleur (5, 5', 5″, 5‴), avec un actionneur associé à cette soupape (6, 6', 6″, 6‴), ainsi qu'au moins une unité de réglage (11 ) qui commande les actionneurs des soupapes (6, 6', 6″, 6‴),
**caractérisé en ce que**
l'unité de réglage (11) est configurée pour fournir les opérations pour la réalisation d'un procédé selon l'une quelconque des revendications 1 à 8.

# Fig. 1

# Fig. 2

P-Reglerausgangssignal bei negativer Verschiebung des Proportionalbandes

# Fig. 3

P-Reglerausgangssignal bei positiver Verschiebung des Proportionalbandes

# Fig. 4

Raumtemperaturverlauf bei Aufheizvorgang mit darauf folgendem Einschwingen auf positive Regelabweichung

Proportionalanteil des PI-Reglers

Integralanteil des PI-Reglers, nach Sollwertänderung gesperrt bis zum Eintreten in das Proportionalband

## Fig. 5

# Fig. 6

| Initialisierung |
| --- |
| Heiz (Kühl) Betrieb der Anlage mit m Räumen über n Tage mit PI-Regelung nach der Methode der Pulsweitenmodulation (Ventile 0% oder 100% geöffnet)<br><br>Raumweises Auswerten des I-Anteils mindestens 1x täglich über n Tage, daraus resultierend fortlaufende Adaption der Lage des Proportionalbandes (PBS(m))<br><br>Bestimmen der raumweisen Gradienten für Aufheiz (Abkühl) Phase, fortlaufende Optimierung des Werts über n Tage (Gradient(m)) |

Mittelwert PBS_mittel aus PBS(m) berechnen

Mittelwert Gradient_mittel aus Gradient(m) berechnen

Weiter zu optionalem Zwischenschritt oder zu Stufe (b)

# Fig. 7

Von Stufe (a)

Markieren aller Räume, bei denen die folgende Bedingungen erfüllt sind:

$PBS(m) < PBS\_mittel - x\,\%$
x zwischen 10% und 30%
(Bedingung 1)

**UND**

$Gradient(m) > Gradient\_mittel$
(Bedingung 2)

nein

Wurde mindestens 1 Raum markiert ?

ja

Keine Optimierung der Leistungsabgabe sinnvoll

Ende

Optimierung der Leistungsabgabe sinnvoll

Weiter zu Sufe (b)

# Fig. 8

Von optionalem Zwischenschritt
oder von Stufe (a)

Ermitteln einer raumweisen Kennzahl (Raumfaktor) der m Räume zur Kompensation
der Fehlanpassungen:

Raumfaktor = 100% + PBS - PBS_max:

PBS = Proportionalbandverschiebung des betreffenden Raums
PBS_max = größter gefundener Wert der Proportionalbandverschiebung aller Räume

Anwenden des Raumfaktors(m) auf das von dem PI-Regler stammende PWM Signal
für die Ansteuerung der Antriebe in der Art, dass während der Gesamtzeit der
Ansteuerung der durchschnittliche Zufluss des Temperiermediums auf den durch den
Raumfaktor(m) festgelegten Wert gegenüber dem unkompensierten Wert begrenzt
wird

# Fig. 9

## Raumfaktor

Kleinste ermittelte P-
Bandverschiebung: -25%

Raumfaktor 60% für Raum mit
P-Bandverschiebung -20%

Größte ermittelte P-
Bandverschiebung: +20%

Proportionalbandverschiebung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1606556 A1
- DE 102006060324 A1
- DE 102015121418 B3
- DE 102011018698 A1
- EP 3009751 B1